# EUROPÄISCHE PATENTSCHRIFT

(11) **EP 1 479 717 B1**
(45) Veröffentlichungstag und Bekanntmachung des Hinweises auf die Patenterteilung: **09.04.2008**
(21) Anmeldenummer: 04008948.4
(22) Anmeldetag: 14.04.2004
(51) Int. Cl.: C08J 9/12, C08L 25/12

(54) **Extrudierte Schaumstoffplatten aus Styrol-Acrylonitril-Copolymeren**
Extruded foam sheets from styrene acrylonitrile copolymers
Plaques de mousse extrudées à base de copolymères Styrène-Acrylonitrile

(30) Priorität: 14.05.2003 DE 10321787
(43) Veröffentlichungstag der Anmeldung: 24.11.2004
(73) Patentinhaber: BASF SE, 67056 Ludwigshafen (DE)
(72) Erfinder: Dietzen, Franz-Josef, Dr., 67454 Hassloch (DE); Ehrmann, Gerd, Dr., 67146 Deidesheim (DE); Scherzer, Dietrich, Dr., 67433 Neustadt (DE); Rück, Swen, 67549 Worms (DE)

(56) Entgegenhaltungen:
- NL-C- 1 005 985
- US-A- 5 567 742

## Beschreibung

Die Erfindung betrifft ein Verfahren zur Herstellung von Schaumstoffplatten auf Basis von Styrol-Acrylnitril-Copolymeren durch Extrusion einer Treibmittel-haltigen Polymerschmelze und anschließendem Verschäumen, sowie eine Schaumstoffplatte, die mindestens 60 Gew.-% eines Styrol-Acrylnitril-Copolymeren enthält.

Extrudierte Polystyrol-Schaumstoffe (XPS) werden in großem Maße zum Isolieren von Gebäuden und Gebäudeteilen eingesetzt. Da derartige Schaumstoffe auch mit Mineralölen, speziell mit flüssigen Kohlenwasserstoffen, in Berührung kommen können, bestand eine Aufgabe der Erfindung darin, die Mineralölbeständigkeit von XPS-Platten zu verbessern.

Neuerdings werden aus Umweltschutzgründen zur Herstellung von XPS-Platten halogenfreie Treibmittel, vorzugsweise CO₂-haltige Treibmittelgemische, eingesetzt. Derartige Treibmittel haben jedoch eine geringere Expansionswirkung als herkömmliche Treibmittel auf Basis von Halogenkohlenwasserstoffen, so dass die Herstellung von verhältnismäßig dicken Schaumstoffplatten mit halogenfreien Treibmitteln schwierig ist. Eine weitere Aufgabe der Erfindung bestand also darin, die Expansionswirkung von halogenfreien Treibmitteln zu verbessern.

Schaumstoffplatten auf Basis von Styrolpolymerisaten mit verbesserter Mineralölbeständigkeit sind aus DE-A 196 37 366 bekannt. Sie enthalten als Hauptkomponente Polystyrol, das durch 5 bis 50 Gew.-% Styrol-Acrylnitril-Copolymeren (SAN) ersetzt wird. Als Treibmittel wird bevorzugt eine Kombination von 3,5 Gew.-% Kohlendioxid (CO₂) und 3 Gew.-% Ethanol verwendet.

Die NL-C 1 005 985 betrifft einen Polymerschaumstoff, welcher als wesentliche Komponente ein Styrolcopolymer mit einem Anteil von 18 bis 35 mol-% an Monomereinheiten eines Anhydrides bzw. dessen Imid, beispielsweise Styrol-Maleinsäureanhydrid-Copolymere enthält.

Aufgabe der Erfindung war es, ein Verfahren zur Herstellung von extrudierten Schaumstoffplatten auf Basis von Styrolpolymerisaten zu finden, das mit umweltfreundlichen und überwiegend unbrennbaren Treibmitteln durchführbar ist und insbesondere mit Styrolpolymerisaten mit sehr hohem Anteil an Styrol-Acrylnitril-Copolymeren zu Schaumstoffplatten mit guter Lösungsmittelbeständigkeit führt.

Demgemäß wurde ein Verfahren zur Herstellung von Schaumstoffplatten, welche mindestens 60 Gew.-% eines Styrol-Acrylnitril-Copolymeren enthalten, durch Extrusion einer Treibmittel-haltigen Polymerschmelze und anschließendem Verschäumen gefunden, wobei als Treibmittel oder Treibmittelkomponente 0,2 bis 3 Gew.-% Wasser und 0,5 bis 5 Gew.-% Kohlendioxid, jeweils bezogen auf die Polymerschmelze, verwendet wird.

Neben Wasser und Kohlendioxid (CO₂) können als zusätzliche Treibmittel grundsätzlich die üblichen inerten Gase wie Stickstoff oder Argon, aliphatische C₃-C₆-Kohlenwasserstoffe, wie Propan, Butan, Pentan oder Hexan, aliphatische Alkohole oder aliphatische Ketone mit einem Siedepunkt zwischen 56 und 100°C, beispielsweise Methanol, Ethanol, Propanol, Isopropanol, Butanol, Aceton oder Methylaceton, aliphatische Ester, wie Methyl- oder Ethylacetat, halogenierte, insbesondere fluorierte Kohlenwasserstoffe (z.B. 134a oder 152a) oder chemische Treibmittel eingesetzt werden. Besonders bevorzugt werden halogenfreie Treibmittel, insbesondere Wasser, CO₂, iso-Butan, Aceton und Ethanol eingesetzt.

Die Treibmittelmenge richtet sich nach der gewünschten Dichte der Schaumstoffplatten. In der Regel wird das Treibmittel der Polymerschmelze in Mengen von 0,5 bis 15 Gew.-%, bevorzugt in Mengen von 3 bis 12 Gew.-%, bezogen auf die Polymerschmelze, zugesetzt.

Erfindungsgemäß wird als Treibmittel Wasser und Kohlendioxid gemeinsam verwendet. Hierbei wird der Polymerschmelze 0,2 bis 3 Gew.-% Wasser und 0,5 bis 5 Gew.-% Kohlendioxid, jeweils bezogen auf die Polymerschmelze, zugesetzt. Besonders bevorzugt werden zusätzlich 0,5 bis 5 Gew.-% eines aliphatischen C₃-C₆-Kohlenwasserstoffes, eines aliphatischen Alkohols oder aliphatischen Ketons mit einem Siedepunkt zwischen 56 und 100°C, verwendet.

Besonders lösungsmittelbeständige Schaumstoffplatten enthalten mindestens 60 Gew.-%, bevorzugt 80 bis 100 Gew.-% eines Styrol-Acrylnitril-Copolymeren. Bevorzugt besteht das Styrol-Acrylnitril-Copolymer aus 10 bis 50 Gew.-% Acrylnitril und 50 bis 90 Gew.-% Styrol. Bevorzugt sind binäre Styrol-Acrylnitril-Copolymere (SAN), Terpolymere mit weiterne Comonomeren, z. B. Methylmethacrylat , Butylacrylat oder Butadien sowie Pfropfcopolymeristate von Styrol und Acrylnitril auf einem kautschukelastischen Polymerisat, wie Polybutadien oder ein Polyacrylat, z. B. Acrylnitril-Butadien-Styrol-Polymere (ABS) oder Acrylnitril-Styrol-Acrylester-Polymer (ASA).
Bevorzugt weisen die erfindungsgemäßen Schaumstoffplatten eine Dichte von 10 bis 400 g/l , insbesondere von 20 bis 150 g/l und einen Querschnitt von mindestens 20 cm² auf.

Als weitere übliche Zusatz- und/oder Hilfsstoffe können der Polymerschmelze Antistatika, Sabilisatoren, Farbstoffe, Füllstoffe, Flammschutzmittel und/oder Keimbilndner in üblicher Menge zugegeben werden.

### Beispiele:

### Beispiel 1:

Ein Styrol-Acylnitril-Copolymers (SAN) mit 35 Gew.-% Acrylnitril wurde zusammen mit 0,5 Gew.-% Talkum kontinuierlich einem Aufschmelzextruder zugeführt. Durch eine in dem Aufschmelzextruder angebrachte Einlassöffnung wurde 4 Gew.-% CO₂ und 1 Gew.-% Wasser, jeweils bezogen auf die Polymerschmelze, kontinuierlich zugeführt. Die treibmittelhaltige Polymerschmelze wurde in einem nachfolgenden Kühlextruder auf 144,4°C abgekühlt und durch eine Schlitzdüse extrudiert. Die aufschäumende Schmelze wurde in einer Kalibriervorrichtung zu Schaumstoffplatten einer Dicke von 44 mm und einer Dichte von 32 g/l geformt.

### Beispiele 2 - 14:

Beispiel 1 wurde wiederholt, wobei die in Tabelle 1 angegebenen Treibmittel mengen in Gew.-%, bezogen auf die Polymerschmelze, eingesetzt wurden. Die Beispiele 11 bis 14 wurden mit 1 Gew.-% einer dritten Treibmittelkomponente (Iso-Butan, Aceton bzw. Ethanol) durchgeführt. Die treibmittelhaltige Polymerschmelze wurde in einem nachfolgenden Kühlextruder auf die angegebene Schäumtemperatur (T-Sch) abgekühlt und durch eine Schlitzdüse extrudiert. Die aufschäumende Schmelze wurde in einer Kalibriervorrichtung zu Schaumstoffplatten geformt. Die Versuchsparameter und Ergebnisse sind in Tabelle 1 zusammengestellt.

Die Vergleichsversuche V1 - V3 wurden analog Beispiel 1, aber nur mit CO₂ als Treibmittel durchgeführt.

**Tabelle 1:**

| Bsp. | CO₂ [%] | H2O [%] | T-Sch [°C] | Dichte [g/l] | Bemerkung |
|---|---|---|---|---|---|
| V1 | 3,5 | | 152,2 | -- | Schaum kollabiert |
| V2 | 4,0 | | 149,7 | -- | Schaum kollabiert |
| V3 | 4,6 | | 147,3 | -- | Schaum kollabiert |
| 1 | 4,0 | 1,0 | 144,4 | 32,0 | |
| 2 | 1,2 | 1,2 | 149,2 | 81,9 | |
| 3 | 1,6 | 1,0 | 148,4 | 71,2 | |
| 4 | 2,4 | 1,0 | 146,2 | 54,4 | |
| 5 | 3,2 | 1,0 | 145,3 | 41,1 | |
| 6 | 4,0 | 1,0 | 144,4 | 32,0 | |
| 7 | 4,2 | 1,25 | 142,6 | 32,7 | |
| 8 | 4,2 | 1,50 | 141,3 | 31,7 | |
| 9 | 4,2 | 1,80 | 139,9 | 31,3 | |
| 10 | 4,0 | 1,0 | 144,4 | 32,0 | |
| 11 | 4,2 | 1,8 | 139,9 | 31,3 | |
| 12 | 4,0 | 1,0 | 141,3 | 28,1 | 1 % Iso-Butan |
| 13 | 4,0 | 1,0 | 140,4 | 29,6 | 1 % Aceton |
| 14 | 4,0 | 1,0 | 140,9 | 29,9 | 1 % Ethanol |

## Patentansprüche

1. Verfahren zur Herstellung von Schaumstoffplatten, welche mindestens 60 Gew.-% eines Styrol-Acrylnitril-Copolymeren enthalten, durch Extrusion einer Treibmittel-haltigen Polymerschmelze und anschließendem Verschäumen, **dadurch gekennzeichnet, dass** als Treibmittel oder Treibmittelkomponente 0,2 bis 3 Gew.-% Wasser und 0,5 bis 5 Gew.-% Kohlendioxid, jeweils bezogen auf die Polymerschmelze, verwendet wird.

2. Verfahren nach Anspruch 1, **dadurch gekennzeichnet, dass** als Treibmittel zusätzlich 0,5 bis 5 Gew.-%, bezogen auf die Polymerschmelze, eines aliphatischen C₃-C₆-Kohlenwasserstoffes, eines aliphatischen Alkohols oder aliphatischen Ketons mit einem Siedepunkt zwischen 56 und 100°C verwendet werden.

3. Schaumstoffplatte, erhältlich nach dem Verfahren gemäß Anspruch 1 oder 2.

4. Schaumstoffplatte nach Anspruch 3, **dadurch gekennzeichnet, dass** sie 80 bis 100 Gew.-% eines Styrol-Acrylnitril-Copolymeren enthält.

5. Schaumstoffplatte nach Anspruch 4, **dadurch gekennzeichnet, dass** das Styrol-Acrylnitril-Copolymer aus 10 bis 50 Gew.-% Acrylnitril und 50 bis 90 Gew.-% Styrol besteht.

6. Schaumstoffplatte nach Anspruch 4, **dadurch gekennzeichnet, dass** das Styrol-Acrylnitril-Copolymer aus einem Pfropfcopolymeristat von Styrol und Acrylnitril auf einem kautschukelastischen Polymerisat besteht.

7. Schaumstoffplatte nach einem der Ansprüche 4 bis 6, **dadurch gekennzeichnet, dass** sie eine Dichte von 10 bis 400 g/l aufweist.

8. Schaumstoffplatte nach einem der Ansprüche 4 bis 7, **dadurch gekennzeichnet, dass** sie einen Querschnitt von mindestens 20 cm² aufweist.

## Claims

1. A process for producing foam sheets which comprise at least 60% by weight of a styrene-acrylonitrile copolymer, via extrusion of a polymer melt comprising blowing agent, followed by foaming, which comprises the use, as blowing agent or as blowing agent component, of from 0.2 to 3% by weight of water and from 0.5 to 5% by weight of carbon dioxide, based in each case on the polymer melt.

2. The process according to claim 1, wherein the blowing agent used also comprises from 0.5 to 5% by weight, based on the polymer melt, of an aliphatic C₃-C₆ hydrocarbon, or of an aliphatic alcohol or aliphatic ketone with boiling point of from 56 to 100°C.

3. A foam sheet obtainable by the process according to claim 1 or 2.

4. The foam sheet according to claim 3, which comprises from 80 to 100% by weight of a styrene-acrylonitrile copolymer.

5. The foam sheet according to claim 4, wherein the styrene-acrylonitrile copolymer is composed of from 10 to 50% by weight of acrylonitrile and from 50 to 90% by weight of styrene.

6. The foam sheet according to claim 4, wherein the styrene-acrylonitrile copolymer is composed of a graft copolymer of styrene and acrylonitrile on an elastomeric polymer.

7. The foam sheet according to any of claims 4 to 6, whose density is from 10 to 400 g/l.

8. The foam sheet according to any of claims 4 to 7, which has a cross section of at least 20 cm².

## Revendications

1. Procédé pour fabriquer des plaques de mousse, qui contiennent au moins 60 % en poids d'un copolymère de styrène-acrylonitrile, en procédant à l'extrusion d'une masse fondue polymère contenant un agent moussant, puis en réalisant l'expansion de celle-ci, **caractérisé en ce que** l'on utilise, comme agent moussant ou composant d'agent moussant, 0,2 à 3 % en poids d'eau et 0,5 à 5 % en poids de dioxyde de carbone, respectivement, par rapport à la masse fondue polymère.

2. Procédé selon la revendication 1, **caractérisé en ce que** l'on utilise, comme agent moussant, une quantité supplémentaire de 0,5 à 5 % en poids par rapport à la masse fondue polymère, d'un hydrocarbure aliphatique en C₃-C₆, d'un alcool aliphatique ou d'une cétone aliphatique présentant un point d'ébullition compris entre 56 et 100 °C.

3. Plaque de mousse, que l'on peut obtenir à l'aide du procédé selon 1a revendication 1 ou 2.

4. Plaque de mousse selon la revendication 3, **caractérisée en ce qu'**elle contient 80 à 100 % en poids d'un copolymère de styrène-acrylonitrile.

5. Plaque de mousse selon la revendication 4, **caractérisée en ce que** le copolymère de styrène-acrylonitrile est constitué de 10 à 50 % en poids d'acrylonitrile et de 50 à 90 % en poids de styrène.

6. Plaque de mousse selon la revendication 4, **caractérisée en ce que** le copolymère de styrène-acrylonitrile se compose d'un copolymère de styrène et d'acrylonitrile greffé sur un polymère de même élasticité que le caoutchouc.

7. Plaque de mousse selon l'une quelconque des revendications 4 à 6, **caractérisée en ce qu'**elle présente une masse volumique de 10 à 400 g/l.

8. Plaque de mousse selon l'une quelconque des revendications 4 à 7, **caractérisée en ce qu'**elle présente une section transversale d'au moins 20 cm².
